# EUROPÄISCHE PATENTSCHRIFT

(11) **EP 0 425 760 B1**
(45) Veröffentlichungstag und Bekanntmachung des Hinweises auf die Patenterteilung: **25.08.1993**
(21) Anmeldenummer: 90112069.1
(22) Anmeldetag: 26.06.1990
(51) Int. Cl.: B65G 21/22, B65G 19/22, B65G 65/06

(54) **Einrichtung zur Führung der Austragseinrichtungen an Austragsgeräten**
Device for guiding discharge devices upon dischargers
Dispositif pour guider des dispositifs de déchargement sur appareils de déchargement

(30) Priorität: 02.11.1989 DE 3936360; 15.11.1989 DE 3937924
(43) Veröffentlichungstag der Anmeldung: 08.05.1991
(73) Patentinhaber: PWH Anlagen + Systeme GmbH, D-66386 St. Ingbert-Rohrbach (DE)
(72) Erfinder: Steckel, Horst, D-6670 St. Ingbert (DE); Lang, Josef, D-6670 St. Ingbert (DE)
(74) Vertreter: John, Ernst

(56) Entgegenhaltungen:
- DE-A- 3 140 546
- DE-A- 3 724 375
- DE-C- 844 572
- DE-C- 3 533 774
- DE-C- 3 607 504
- GB-A- 2 104 468

## Beschreibung

Die Erfindung betrifft eine Einrichtung zur Führung der Austragseinrichtungen, wie Becher, Schaufeln, Kratzerorgane oder dgl., insbesondere für Austragsgeräte, wie Kratzfördergeräte, Becherwerke oder dgl., mit einer Vielzahl von an mindestens einem Zugorgan angelenkten Austragseinrichtungen, wobei jede Austragseinrichtung mit mehreren außerhalb derselben angeordneten Leit- und Führungsrollen zusammenwirkt, die wiederum auf korrespondierenden Laufflächen abrollen.

Durch die DE-PS 35 33 774 ist eine Aufhängung der Austragseinrichtungen, insbesondere bei Kratzfördergeräten wie Brückenkratzern, Becherwerken oder dgl., bekannt, die mit mindestens einem endlosen angetriebenen Zugorgan, welches über Mitnehmer mit mehreren entlang des Zugorganes angeordneten Austragseinrichtungen zusammenwirkt. Die Austragseinrichtungen sind mittels weiterer Führungselemente gegenüber dem Kratzfördergerät verlagert. Das Zugorgan ist als Rundgliederkette ausgebildet, wobei die Führungselemente zur Aufnahme von Leit- und Führungsrollen durch doppel-T-förmige Bauteile gebildet sind.

Durch die DE-PS 36 07 504 ist eine Austragseinrichtung in Form von Schaufeln oder Bechern, insbesondere für Kratzfördergeräte oder Becherwerke, bekannt, bei der jeder Becher mit einer Traverse verbunden ist, die beiderseits Leit- und Führungsrollen aufweisen, wobei die Schaufeln bzw. Becher durch mindestens ein Zugorgan antreibbar sind und untereinander gelenkig durch in sich starre von der Anlenkstelle einer Schaufel am Zugorgan schräg von diesem in Richtung auf die nächste Schaufel verlaufende Abstandselemente untereinander verbunden sind.

Die DE-OS 37 24 375 betrifft eine Austragseinrichtung insbesondere für Kratzfördergeräte und Becherwerke, bei der jeder Becher bzw. jede Schaufel mit einer Traverse verbunden ist, die Schaufeln bzw. Becher durch Ketten, insbesondere Rundgliederketten, antreibbar sind und die Schaufeln bzw. Becher durch außerhalb derselben angeordnete zunächst einseitig mit den Traversen zusammenwirkende Abstandselemente untereinander verbunden sind. Außerhalb der Verlagerungspunkte der Kragarme sind Leit- und Führungsrollen vorgesehen, wobei die Zugorgane unterhalb der Leit- und Führungsrollen angeordnet sind.

Die beim St.d.T. eingesetzten Leit- und Führungsrollen bestehen üblicherweise aus einer kunststoffbeschichteten Laufrolle sowie einem Radialrillenkugellager, das auf einer radial innenliegenden mit dem Führungsbolzen fest zusammenwirkenden Buchse angeordnet ist. Die Buchse selber ist auf einen abgesetzten Bolzen aufgepreßt und wird mittels Abstandsscheiben gegenüber den Halteelemente verlagert. Das Rillenkugellager selber ist axial nach außen abgedichtet. Die üblicherweise verwendeten herkömmlichen Labyrinth- oder Wellendichtungen weisen den Nachteil auf, daß infolge der hohen Schmutzeinwirkung (materialabhängig) die Dichtungen schnell ausfallen und der eindringende Staub die hoch empfindlichen Kugellager so nachteilig beeinflußt, daß eine Drehbewegung nicht mehr möglich ist. Die so festsitzenden Lager sind somit nur noch zu einer Gleitbewegung fähig, die zu unerwünschten Beschädigungen an korrespondierenden Bauteilen (Führung, Umlenkung oder dgl.)führen kann. Um diesem Problem entgegenzuwirken, werden auch Rillenkugellager mit einer Schmierstoff in verschiedenen Ebenen enthaltenen Dichtung verwandt, wobei der Schmierstoff den eindringenden Materialstaub möglichst lange aus dem Innenteil des Lagers fernhalten soll.

Durch diese Maßgabe wird zwar eine Erhöhung der Lebensdauer des Lagers erreicht, nachteilig sind jedoch die mit der Fertigung verbundenen hohen Kosten anzusehen. Da bei den Austragseinrichtungen Umlenkelemente wie Kettensterne oder dgl. vorhanden sind, treten bei der Umlenkung vielfach Schläge im System auf, die sich ebenfalls nachteilig auf die Standzeit der Radialkugellager auswirken. Darüberhinaus nachteilig an einer solchen Ausführung ist die komplizierte Demontage bzw. Montage anzusehen (Preßsitz), die bei stehendem Gerät relativ problembehaftet ist.

Der Erfindung liegt ausgehend von der im gattunsbildenden Teil des ersten Patentanspruches beschriebenen Einrichtung die Aufgabe zugrunde, eine preiswerte, von Verschmutzungen langfristig nicht beeinflußbare und von den ggf. auftretenden Schlägen im System unabhängige Lagereinrichtung zu konzipieren, die mit möglichst einfachem Aufwand montiert bzw. demontiert werden kann, um so bei anstehendem Austausch die Stillstandszeit des Gerätes möglichst minimal zu halten.

Diese Aufgabe wird erfindungsgemäß dadurch gelöst, daß jede Leit- und Führungsrolle in an sich bekannter Weise aus einem Gummi- oder Kunststoffring gebildet und im Bereich ihres Innenumfanges mit einer geschlitzten, radial nach außen federnden Einspannbüchse versehen ist, die mit geringem radialem Spiel auf einem Bolzen verlagert und axial zwischen Büchsen, Scheiben oder dgl. mit Spiel geführt ist.

Sinnvolle Weiterbildungen des Erfindungsgegenstandes sind den Unteransprüchen zu entnehmen.

Der Gummi- oder Kunststoffring wird mit einer vorzugsweise genormten Einspannbüchse aus Federstahl versehen. Der Bolzen wird glatt, d.h. ohne Absätze, ausgebildet und mit einer Oberflächenhärtung ausgeführt. Die Leit- und Führungsrollen sind axial zwischen Büchsen, Scheiben oder dgl. gehalten, wobei die äußere Büchse am Bolzen mittels eines Spannstiftes arretiert wird. Der Bolzen selber erhält ebenfalls einen Spannstift, der ihn gegen Drehung und axiale Verschiebung sichert. Die Einspannbüchse wird ausschließlich durch ihre radial nach außen wirkende Federkraft in dem Gummi- oder Kunststoffring gehalten, so daß es keine Relativbewegung zwischen der Büchse und dem Ring gibt.

Bei der Anwendung einer Schaufel- oder Becheranordnung, wie sie beispielsweise in der DE-PS 36 07 504 oder der DE-OS 37 24 375 beschrieben sind, sind die Belastungen der Leit- und Führungsrollen als äußerst gering anzusehen, da so gut wie keine Schläge mehr in das System eingeführt werden. Durch diese Maßnahme ist eine hohe Lebensdauer der erfindungsgemäßen Lagerung gegeben.

Diese sehr einfach bauende Lagerung ist sowohl temperatur- als auch verschmutzungsunabhängig und ist infolge des Radialspiels zwischen der Einspannbüchse und dem Bolzen in Zusammenwirken mit der glatten gehärteten Bolzenoberfläche in der Lage, den eintretenden Schmutz fein zu zermahlen und ihn axial nach außen zu transportieren. Die axial zwischen der einen Halterung und der Leit- und Führungsrolle angeordnete Büchse, Scheibe oder dgl., die ebenfalls mit Radial- und Axialspiel auf dem Bolzen angeordnet ist, kann hierbei als Vormahleinrichtung bzw. Vorzerkleinerungseinrichtung tätig werden, ehe der Staub erst in die als Gleitlager ausgebildete Lagerstelle eintritt.

Im Gegensatz zum St.d.T. wird hier eine absolut preiswerte, leicht zu montierende bzw. demontierende Einrichtung geschaffen, die keinerlei Dichtelemente benötigt und somit wesentlich preiswerter als die vorab beschriebenen mit Spezialdichtungen versehenen Leit- und Führungsrollen ausgebildet ist.

Die Erfindung ist anhand von Ausführungsbeispielen in der Zeichnung dargestellt und wird wie folgt beschrieben. Es zeigen:
- Fig. 1: perspektivische Darstellung einer Kratzerschaufel mit zugehörigen Leit- und Führungsrollen
- Fig. 2: schematische Darstellung einer Schaufelaufhängung an einem Brückenkratzer in der Vorderansicht mit zugehörigen Leit- und Führungsrollen
- Fig. 3 und 4: verschiedene Ansichten eines Becherwerkes mit Kragarmen und Schubgelenkverlagerung sowie zugehörigen Leit- und Führungsrollen
- Fig. 5: Einzeldarstellung eines Lagerbereiches der Leit- und Führungsrollen gemäß Figur 2

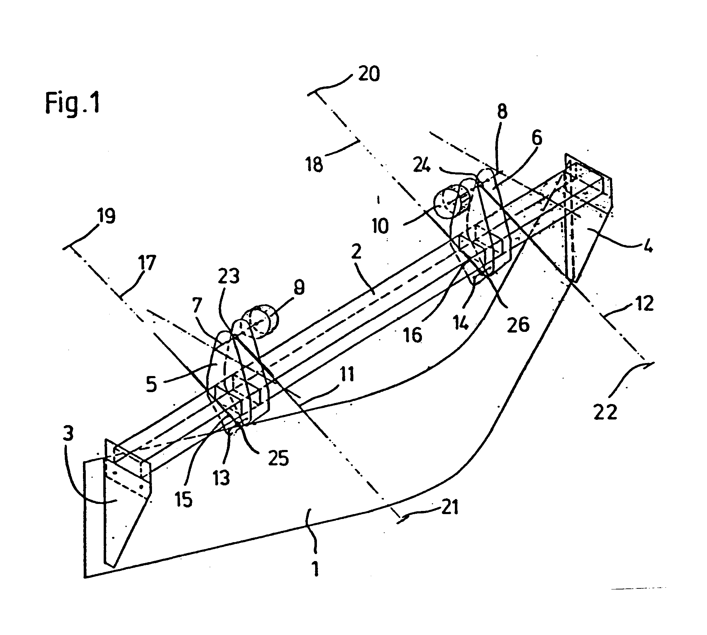

Figur 1 zeigt eine perspektivische Darstellung einer Kratzerschaufel. Die Schaufel 1 besteht aus einem gebogenen Blech, einer Traverse 2, die in ihren Endbereichen an Versteifungsblechen 3,4 angeschraubt ist. An der Traverse 2 sind Halterungen 5,6 in Form von beabstandeten Laschen vorgesehen. Im oberen Bereich der Halterungen 5,6 sind durchgehende Achsen 7,8 angeordnet. An den Achsen 7,8 sind jeweils, von innen nach außen gesehen, eine Führungsrolle 9,10, eine Stange 11,12 sowie ein nicht weiter dargestelltes Kettenglied angelenkt. Die Ketten selber sind nur strichpunktiert angedeutet. Unterhalb der Traverse 2 ist eine weitere Achse 13,14 vorgesehen, die zur Lagerung des Endes 15,16 weiterer Stangen 17,18 dienen. Die freien Enden 19,20 dienen zur Befestigung an den oberen Bereichen der Halterungen einer nicht weiter dargestellten danebenliegenden Schaufel. Die freien Enden 21,22 der Stangen 11,12 werden an Achsen im unteren Bereich der Halterungen 5,6 einer ebenfalls nicht dargestellten Schaufel gelenkig befestigt. Als Dämpfungselemente können in den Lagerbereichen 23,24,25,26 der Stangen 11,12,17,18 sogenannte 'Silentbuchsen' eingesetzt werden, die geringe Bewegungen spielfrei und ohne Geräusche übertragen.

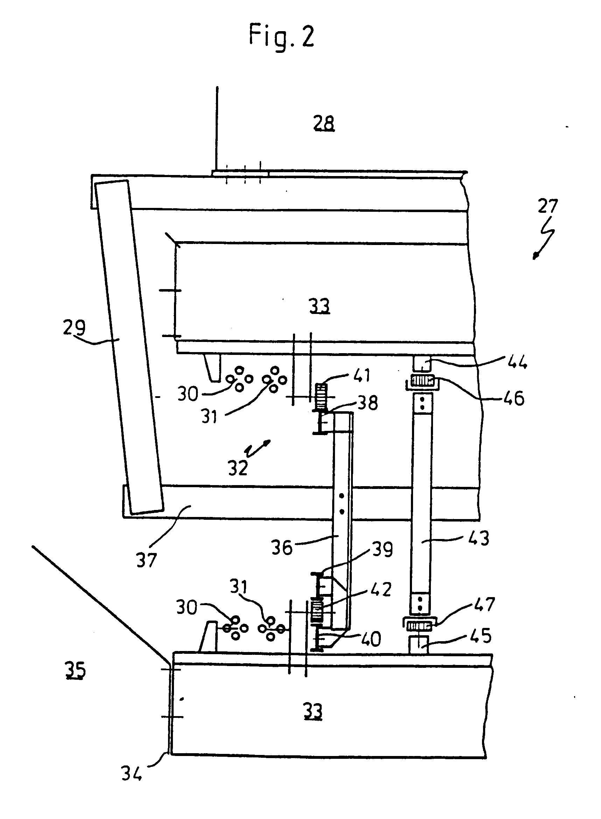

Figur 2 zeigt eine schematische Darstellung einer Schaufelaufhängung 27 an einem nicht weiter dargestellten Brückenkratzer. Lediglich angedeutet ist ein an der Brücke aufgehängter Kasten 28, der die tragende Konstruktion für die Schaufelaufhängung 27 bildet. In definierten Abständen ist eine Rahmenkonstruktion 29 am Kasten 28 befestigt. Innerhalb des Rahmens 29 verlaufen die oberen Trume der Rundgliederketten 30,31, die außerhalb der Führungselemente 32 an den als Schaufeln ausgebildeten Austragseinrichtungen 33 angelenkt sind. Der eigentliche Materialaustrag erfolgt im Fußbereich 34 der nur angedeuteten Halde 35. Die Führungselemente 32 werden hier durch Hebel 36 gebildet, die an der unteren Querstrebe 37 des Rahmens 29 befestigt sind. In den Endbereichen der Hebel 36 sind doppel-T-förmige Bauteile 38,39,40 angeordnet, die als Laufbahnen für kunststoffbeschichtete Leit- und Führungsrollen 41,42 (Vertikalrollen) dienen, wobei die jeweilige Leit- und Führungsrolle 42 zwischen zwei doppel-T-förmigen Bauteilen 39,40 geführt ist. Um eventuelle Querkräfte aufnehmen zu können, sind in der Mitte der Austragseinrichtungen 33 weitere Hebel 43 vorgesehen, die im Bereich der oberen und unteren Trume 44,45 mit Horizontalrollen 46,47 versehen sind.

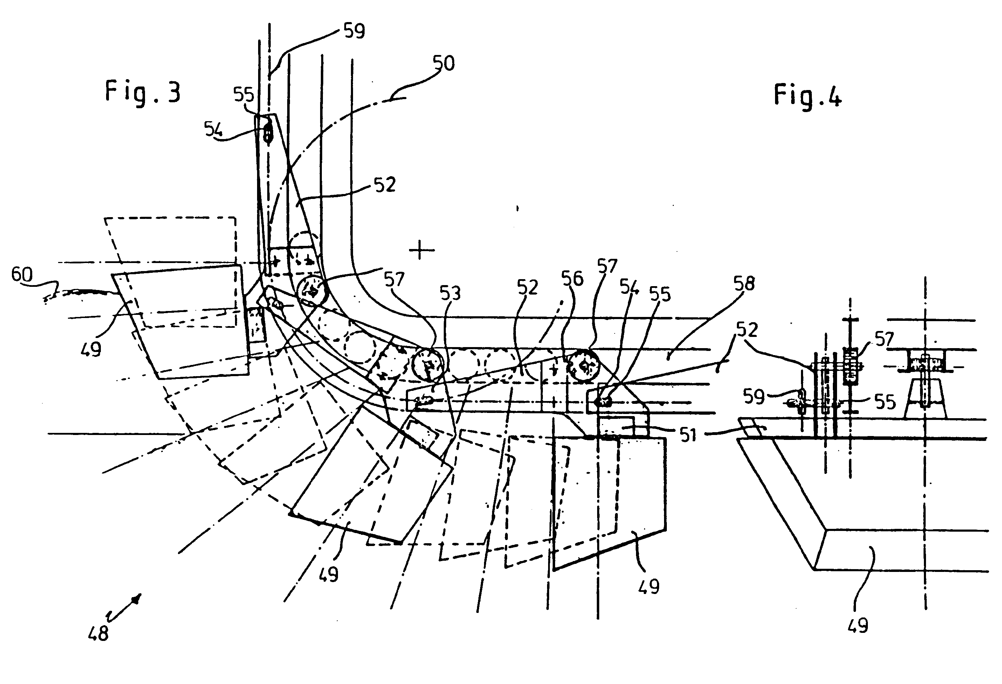

Die Figuren 3 und 4 zeigen eine Austragseinrichtung 48 in Form eines Becherwerkes. Dargestellt ist im wesentlichen die Umlenkung der Becher 49 um den unteren Turas 50. Die Becher 49 nehmen das Material im horizontalen Bereich auf und werden in die Vertikale umgelenkt. Damit keine Schläge in das System eingehen und die Becher 49 immer optimal gefüllt werden können, ist es erforderlich, sowohl die Polygonwirkung bei der Umlenkung um den Turas 50 als auch die normalerweise sich schlagartig erhöhende Umfangsgeschwindigkeit zu verringern. Dies wird durch folgende Maßnahmen erreicht:

Die Becher 49 weisen eine Traverse 51 auf, an welcher ein Kragarm 52 mit etwa dreieckigem Querschnitt befestigt ist. Das freie Ende 53 eines jeden mit jeweils einem zugehörigen Becher 49 verbundenen Kragarmes 52 (Halterung) ist im Bereich des vorangehenden Bechers 49 dergestalt verlagert, daß bei der Umlenkung der Becher 49 um den Turas 50 eine Längenverschiebung der Bauteile 52 gegeneinander im Bereich des Verlagerungspunktes 54 erfolgen kann. Zu dem Zweck ist im Bereich des Verlagerungspunktes 54 ein Getriebe in Form eines Schubgelenkes 55 vorgesehen, über welches die angesprochene Bewegung durchführbar ist. Im Bereich der oberen Kragarmspitze 56 ist jeweils eine Leit- und Führungsrolle 57 angeordnet, die in einer korrepondierenden Führungsbahn 58 läuft, wobei die Führungsrolle 57 vor der Traverse 51 angeordnet ist. Zwischen Traverse 51 und Führungsrolle 57 ist das Zugorgan 59 in Form einer Rundgliederkette angeordnet. Die Verlagerungspunkte 54 bzw. die Schubgelenke 55 sind vorzugsweise in der Ebene der Zugorgane 59 angeordnet. Durch diese konstruktive Ausgestaltung kann die Umlaufgeschwindigkeit reduziert werden, wobei auch die Haufenbildung 60 verringert und die Becherfüllung verbessert werden.

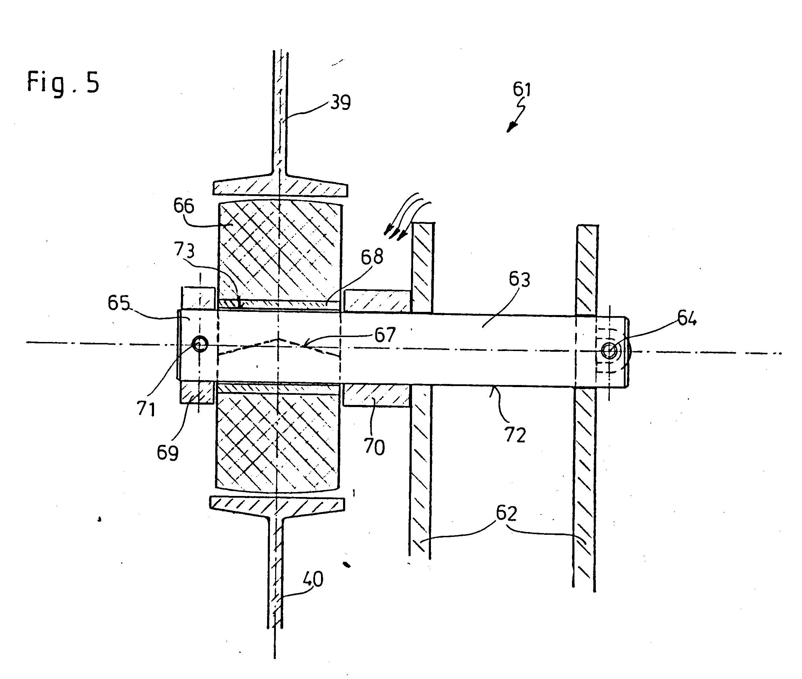

Figur 5 zeigt einen Ausschnitt des Lagerbereiches 61 einer Leit- und Führungsrolle, wie er etwa in Figur 2 dargestellt ist. An den Halterungen 62, die mit den nicht weiter dargestellten Bechern oder Schaufeln 33 befestigt sind, ist ein glatt-zylindrischer, oberflächengehärteter Bolzen 63 verlagert. Im Bereich der äußeren Halterung 62 ist der Bolzen 63 mittels eines Spannstiftes 64 gegen Verdrehung bzw. axiale Verschiebung gesichert. Der freitragende Bolzenteil 65 ist mit einem Gummi- oder Kunststoffring 66 sowie einer darin eingepreßten mit einem in Axialrichtung verlaufenden von der geradlinigen Form abweichenden Schlitz 67 versehenen radial nach außen federnden Einspannbüchse 68 bestückt. Der Gummi- oder Kunststoffring 66 ist axial zwischen Büchsen 69,70 geführt, wobei die axial äußere Büchse 69 mittels eines weiteren Spannstiftes 71 in ihrer Lage arretiert ist. Die Einspannbüchse 68 ist mit geringfügigem radialem Spiel (0,5-1 mm) zum Bolzen 63 verlagert und ist somit in der Lage, zwischen den beabstandeten Buchsen 69 und 70 sich frei hin und her zu bewegen. Der Gummi- oder Kunststoffring 66 ist zwischen den als Laufbahnen 39,40 (Figur 2) ausgebildeten doppel-T-förmigen Bauteilen geführt. Der Schmutz kann in Richtung der Pfeile in den Bereich des Lagers 61 eindringen und wird zwischen der gehärteten Oberfläche 72 des Bolzens 63 und der aus Federstahl bestehenden Oberfläche 73 der Einspannbuchse 68 zerrieben und somit durch die Hin- und Herbewegung der Leit- und Führungsrolle 66,68 axial nach außen transportiert. Infolge ihrer Materialeigenschaften kann diese Lagerung vollkommen ohne Dichtelemente auskommen und zwar über einen sehr langen Zeitraum. Durch Entfernen des Spannstiftes 71 kann die Buchse 69 entfernt und das Lager 66,68 demontiert werden.

## Patentansprüche

1. Einrichtung zur Führung der Austragseinrichtungen, wie Becher, Schaufeln, Kratzorgane oder dgl., insbesondere für Austragsgeräte, wie Kratzfördergeräte, Becherwerke oder dgl., mit einer Vielzahl von an mindestens einem Zugorgan (30,31) angelenkten Austragseinrichtungen (1,33,49), wobei jede Austragseinrichtung (1,33,49) mit mehreren außerhalb derselben angeordneten Leit- und Führungsrollen (9,10,41,42,46,47,57) zusammenwirkt, die wiederum auf korrespondierenden Laufflächen abrollen, dadurch gekennzeichnet, daß jede Leit- und Führungsrolle (9,10,41,42,46,47,57) in an sich bekannter Weise aus einem Gummi- oder Kunststoffring (66) gebildet und im Bereich ihres Innenumfanges mit einer geschlitzten (67) radial nach außen federnden Einspannbüchse (68) versehen ist, die mit geringem radialem Spiel auf einem Bolzen (63) verlagert und axial zwischen Büchsen (69,70), Scheiben oder dgl. mit Spiel geführt ist.

2. Einrichtung nach Anspruch 1, dadurch gekennzeichnet, daß die Einspannbüchse (68), in axialer Richtung gesehen, mit einem geradlinig verlaufenden Schlitz versehen ist.

3. Einrichtung nach Anspruch 1, dadurch gekennzeichnet, daß die Einspannbüchse (68), in axialer Richtung gesehen, mit einem von der geradlinigen Form abweichenden, wie insbesondere einem schräg, wellenförmig oder pfeilförmig verlaufenden Schlitz (67) versehen ist.

4. Einrichtung nach den Ansprüchen 1 bis 3, dadurch gekennzeichnet, daß die Einspannbüchsen (68) aus Federstahl gebildet sind.

5. Einrichtung nach den Ansprüchen 1 bis 4, dadurch gekennzeichnet, daß der Bolzen (63) zylindrisch mit glatter und gehärteter Oberfläche (72) ausgebildet ist.

6. Einrichtung nach den Ansprüchen 1 bis 5, wobei jede Austragseinrichtung mit Halterungen zur Aufnahme der Bolzen samt Leit- und Führungsrollen versehen ist, dadurch gekennzeichnet, daß jeder Bolzen (63) im Bereich seiner freien Enden (65) mittels Spannstiften (64,71) gegen Verdrehung und Verschiebung gesichert ist, wobei der Spannstift (71) im Bereich der zugehörigen Leit- und Führungsrolle (66,68) auch die hier vorgesehene Büchse (69), Scheibe oder dgl. arretiert.

7. Einrichtung nach Anspruch 6, dadurch gekennzeichnet, daß die zweite Büchse (70), Scheibe oder dgl. mit radialem und axialem Spiel zwischen der zugehörigen Leit- und Führungsrolle (66,68) sowie einer der Halterungen (62) bzw. dem Bolzen (63) angeordnet ist.

## Claims

1. Device for guiding discharge devices, such as buckets, scoops, scraper members or the like, especially for dischargers, such as scraper conveyors, bucket conveyors or the like, having a large number of discharge devices (1, 33, 49) linked to at least one traction device (30, 31), each discharge device (1, 33, 49) co-operating with a plurality of idling and guiding rollers (9, 10, 41, 42, 46, 47, 57) which are arranged outside the latter and which in turn run on corresponding running surfaces, characterised in that each idling and guiding roller (9, 10, 41, 42, 46, 47, 57) is formed in a manner which is known per se by a rubber or plastics ring (66) and is provided in the region of its inner periphery with a slotted (67) tensioning bush (68) springing resiliently radially outwards which is mounted with a slight radial play on a bolt (63) and guided axially with play between bushes, (69, 70) plates or the like.

2. Device according to Claim 1, characterised in that the tensioning bush (68), seen in an axial direction, is provided with a rectilinear slot.

3. Device according to Claim 1, characterised in that the tensioning bush (68), seen in an axial direction, is provided with a slot (67) deviating from the rectilinear form, such as in particular a slot extending obliquely or in an undulating or arrow shape.

4. Device according to Claims 1 to 3, characterised in that the tensioning bush (68) is formed of spring steel.

5. Device according to Claims 1 to 4, characterised in that the bolt (63) is cylindrical with a smooth and hardened surface (72).

6. Device according to Claims 1 to 5, wherein each discharge device is provided with retaining means to receive the bolts together with the idling and guiding rollers, characterised in that each bolt (63) is secured against rotation and displacement in the region of its free ends (65) by means of dowel pins (64, 71), the dowel pin (71), in the region of the corresponding idling and guiding roller (66, 68), also locking the bush (69), plate or the like provided there.

7. Device according to Claim 6, characterised in that the second bush (70), plate or the like is arranged with radial and axial play between the corresponding idling and guiding roller (66, 68) and also one of the retaining means (62) or the bolt (63).

## Revendications

1. Dispositif pour guider des dispositifs de déchargement tels que des pelles, des augets, des organes de raclage ou analogue, notamment pour des appareils de déchargement tels que des convoyeurs à racles, des transporteurs à godets, ou analogues, comportant une multiplicité de dispositifs de déchargement (1,33,49) articulés sur au moins un organe de traction (30,31), chaque dispositif de déchargement (1,33,49) coopérant avec plusieurs galets de pilotage et de guidage (9,10,41,42,46,47,57), qui sont disposés à l'extérieur de ce dispositif et roulent pour leur part sur des surfaces de roulement correspondantes, caractérisé en ce que chaque galet de pilotage et de guidage (9,10,41,42,46,47,57) est formé de façon connue en soi par une bague en caoutchouc ou en matière plastique (66) et comporte, au niveau de sa périphérie intérieure, une douille de serrage (68) fendue (67), qui a un effet élastique radial dirigé vers l'extérieur, est montée avec un faible jeu radial sur un boulon (63) et est guidée axialement avec jeu entre des douilles (69,70), des rondelles ou analogues.

2. Dispositif selon la revendication 1, caractérisé en ce que, lorsqu'on regarde dans la direction axiale, la douille de serrage (68) comporte une fente rectiligne.

3. Dispositif selon la revendication 1, caractérisé en ce que, lorsqu'on regarde dans la direction axiale, la douille de serrage (68) comporte une fente (67), dont la forme diffère de la forme rectiligne, à savoir notamment une fente oblique, ondulée ou en forme de flèche.

4. Dispositif selon les revendications 1 à 3, caractérisé en ce que les douilles de serrage (68) sont réalisées en un acier pour ressorts.

5. Dispositif selon les revendications 1 à 4, caractérisé en ce que le boulon (63) possède une forme cylindrique avec une surface lisse et trempée (72).

6. Dispositif selon les revendications 1 à 5, dans lequel chaque dispositif de déchargement est pourvu de supports servant à recevoir les boulons ainsi que des galets de pilotage et de guidage, caractérisé en ce que chaque boulon (63) est bloqué contre toute rotation et toute translation, au niveau de ses extrémités libres (65), au moyen de goupilles de serrage (64,71), la goupille de serrage (71) située au voisinage du galet de pilotage et de guidage associé (68,68) retenant également la douille (69), la rondelle ou analogue prévue à cet endroit.

7. Dispositif selon la revendication 6, caractérisé en ce que la seconde douille (70), rondelle ou analogue est montée avec un jeu radial et un jeu axial entre le galet associé de pilotage et de guidage (66,68) ainsi que l'un des supports (62) ou le boulon (63).
